# EUROPEAN PATENT APPLICATION

(11) **EP 0 821 496 A2**
(43) Date of publication of application: **28.01.1998**
(21) Application number: 97401770.9
(22) Date of filing: 23.07.1997
(51) Int. Cl.: H04B 7/26

(54) **Interoffice phase synchronization system and interoffice phase synchronization method**

(30) Priority: 24.07.1996 JP 194186/96
(71) Applicant: NEC CORPORATION, Tokyo (JP)
(72) Inventor: Atsushi, Kimura, Minato-ku, Tokyo (JP)
(74) Representative: Dubois-Chabert, Guy

(57) **Abstract**

In a TDMA communication system having one master station and a plurality of slave ststions, phase synchronization of output frame phases between slave stations is established with quite simple construction. In the master station, a super frame consisted of a plurality of standard frames is generated in the super frame generating portion. In the master station, using a timing position matching loop already existing between the master station and the slave station, signal delay period between the slave station and the master station is derived. The delay period is transmitted superimposing on the frame in the super frame period. In the slave station, half period of the delay period defined by the delay information is calculated. The super frame is delayed for the corresponding period to out to the next stage service area. By this, phase of the super frame is synchronized between all of the slave stations.

## Description

### BACKGROUND OF THE INVENTION

### Field of the Invention

The present invention relates to an interoffice phase synchronization system and an interoffice phase synchronization method. More specifically, the invention relates to an interoffice phase synchronization system constituted of master station and a plurality of slave stations, in which a frame signal is transmitted from the master station to a plurality of slave stations, and phase synchronization of the frame is established between the slave stations.

### Description of the Related Art

In a time division multidirtection multiplex communication system constituted of one master station, a plurality of slave stations or repeat stations, when a base station, such as digital cordless telephone system, cellular system and so forth or the equivalents thereof is mounted under control of the slave station, it is required to adjust an absolute phase of the overall system within a demanded allowable range in between the slave stations (base stations).

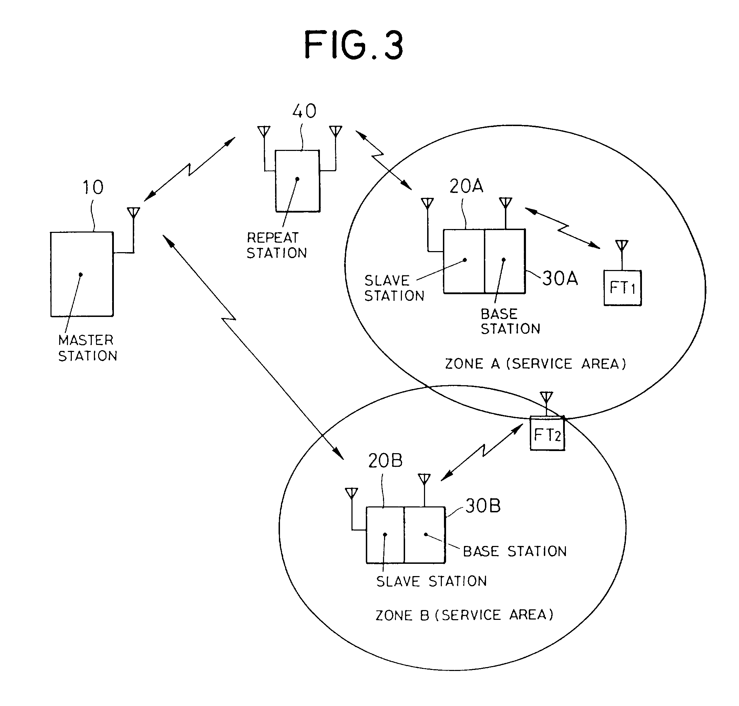

For example, it is assumed that an overall system is constructed with a master station 10, slave stations 20A and 20B and a repeat station 40, and to the slave stations 20A and 20B, base stations 30A and 30B are connected respectively, and service areas (A zone and B zone) of these slave stations 20A and 20B are partly overlapping, as shown in Fig. 3. It should be noted that FT1 and FT2 are stationary or mobile communication terminals.

In such system, the terminal FT2 located at mutually overlapping service areas may receive the same frame signal from both of the slave stations, namely the base stations 30A and 30B. Therefore, broadcast control channel and so forth require to establish phase synchronization in the zones A and B since the radio waves of both base stations should cause interference on the terminal FT2.

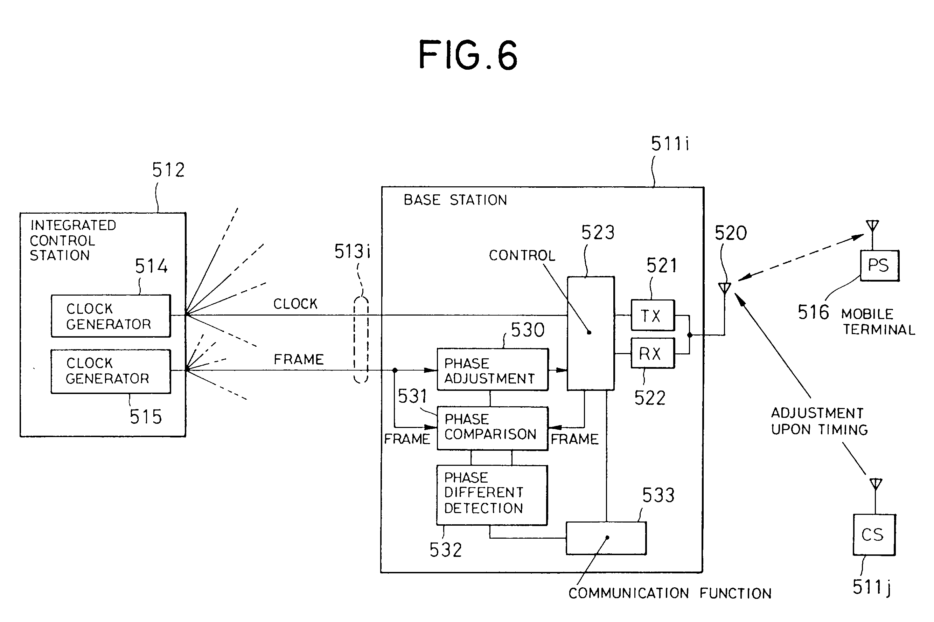

Here, reference is made to Japanese Unexamined Patent Publication No. Heisei 7-284148, there has been disclosed an example in establishing synchronization of radio frame between the stations. The example is illustrated in Fig. 6.

As this type of interoffice synchronization system, mainly, a network cascade synchronization system, autonomous synchronization system, a reference clock synchronization system and so forth are present. The example shown in Fig. 6 illustrates a technology in the network cascade synchronization system.

In the shown example, between a integrated control station 512 and a base station 511i is connected by a wired transmission line 513i. When a synchronization is established by the frame signal from the network side, it becomes necessary to measure a delay amounts for respective base stations.

For this purpose, a signal from other base station 511j (with obtaining phase of a radio frame of peripheral space), a phase difference of the received signal with respect to a reference frame from the network by a phase comparator 531, a phase difference detector 532. Based on this, the reference frame from the network is phase controlled by a phase adjuster 530 to establish synchronization of the radio frame of the station 511i.

It should be noted that, in Fig. 6, a clock generator 514 and the frame generator 515 are adapted to generate the reference frame and distribute to respective base stations. On the other hand, TX521 denotes a transmitting portion, RX522 denotes a receiver portion, 523 denotes a control portion. A communication function portion 533 transforms a phase difference information from the phase difference detector 532 into a format adapted to communication to transfer to the control portion 523 for transmitting to the integrated control portion 512.

In such conventional interoffice phase synchronization system, the base station is required a function for transmission and reception for phase matching with the peripheral base stations in addition to a function to perform control with the terminal. In certain case, it becomes necessary to provide a special receiver.

Namely, for phase synchronization, it is necessary to capture the radio wave (control channel) from the peripheral stations. For capturing the radio wave, a dedicated receiver has to be provided.

### SUMMARY OF THE INVENTION

Therefore, it is an object of the present invention to provide an interoffice phase synchronization system and an interoffice phase synchronization method, which restricts addition of special function as much as possible to make best use of functions provided in an existing TDMA (time-division multi-access) system.

According to the first aspect of the invention, an interoffice phase synchronization system for transmitting a frame signal from a master station to a plurality of slave stations and establishing phase synchronization of the frame signal between the slave stations, comprises:
the master station including:
offset amount detecting means for detecting an offset amount of a reception timing position of a timing signal transmitted for phase synchronization from the slave station, relative to a preliminarily defined timing position; and
transmitting means for transmitting a delay information depending upon the detected offset amount;
the slave station including:
transmitting means for transmitting the timing signal to the master station;
extracting means for extracting the delay information included in a transmission signal from the master station; and
delay means for delaying a transmission frame signal from the master station for a delay period depending upon the extracted delay information.

According to a second aspect of the invention, an interoffice phase synchronization method for transmitting a frame signal from a master station to a plurality of slave stations and establishing phase synchronization of the frame signal between the slave stations, comprises:
first step of transmitting a timing signal from the slave station to the master station;
second step of, in the master station, detecting an offset amount of a reception timing position of the timing signal transmitted for phase synchronization from the slave station, relative to a preliminarily defined timing position;
third step of, in the master station, transmitting a delay information depending upon the detected offset amount;
fourth step of, in the slave station, extracting the delay information contained in the transmission signal from the master station; and
fifth step of, in the slave station, delaying a transmission frame signal from the master station for a delay period depending upon the extracted delay information.

The operation will be discussed. In the TDMA (time division multi-direction multiplex communication ) system, the master station (integrated control station) and respective slave stations (base stations) are connected by radio communication instead of wired communication. In such TDMA system, the up frame from the slave station to the master station is spatially multiplexed. Thus, at the reception point in the master station, the burst signals from respective slave stations have to match with each other. Therefore, in each slave station, phase delay function for phase adjustment is already provided. On the other hand, in the master station, the function to measure transmission delay is already provided. By making these functions best use, phase synchronization can be established.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to be present invention, but are for explanation and understanding only.

In the drawings:
Fig. 1 is a block diagram showing the preferred embodiment of a interoffice phase synchronization system according to the present invention;
Figs. 2A to 2D are an illustration showing a relationship between a frame synchronization and a super frame synchronization;
Fig. 3 is a diagrammatic illustration showing an interoffice communication system, to which the present invention is applied;
Fig. 4 is a flowchart showing a control process of timing position matching applicable for the preferred embodiment of the present invention;
Fig. 5 is an illustration showing a relationship between a delay period and distance from a master station; and
Fig. 6 is a block diagram showing conventional system.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscure the present invention.

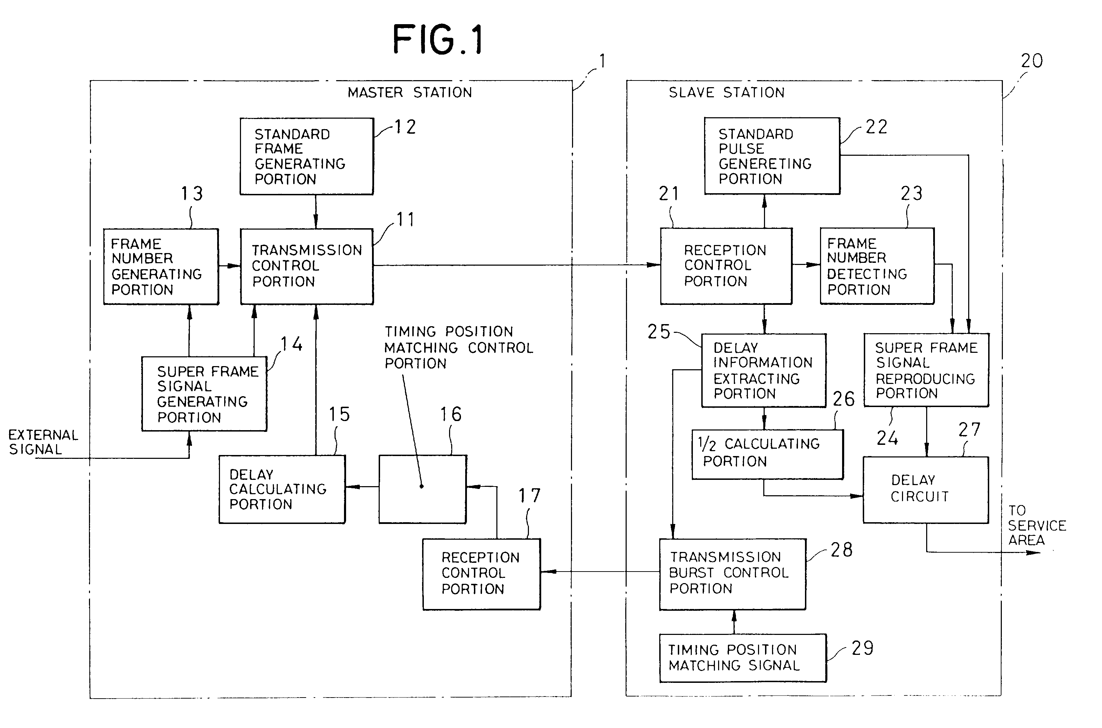

Fig. 1 is a block diagram of the preferred embodiment of an interoffice phase synchronization system according to the present invention. In the drawings, the system is provided with a master station 10 and a slave station 20. While only one slave station 20 is shown for simplification of illustration, it is typical that a plurality of slave stations are provided.

In the master station 10, a transmission control portion 11 forms a radio frame format to be transmitted to a reception control portion 21 in the slave station 20. Specifically, the transmission control portion 11 performs multiplexing process for information from a standard frame generating portion 12, a frame number generating portion 13, a super frame signal generating portion 14 and a delay amount calculating portion 15 to form a transmission frame.

The standard frame generating portion 12 generates a standard frame to be a base of the radio frame. In practice, the standard frame generating portion 12 comprises a counter or so forth to generate a frame pattern and cyclic timing pulse in response to a frame period.

The frame number generating portion 13 assigns frame number for the standard frames and sequentially counts up at every occurrence of variation of the frame. The count value of the frame number generating portion 13 is reset in response to a super frame period from a super frame signal generating portion 14 to complete one cycle of count.

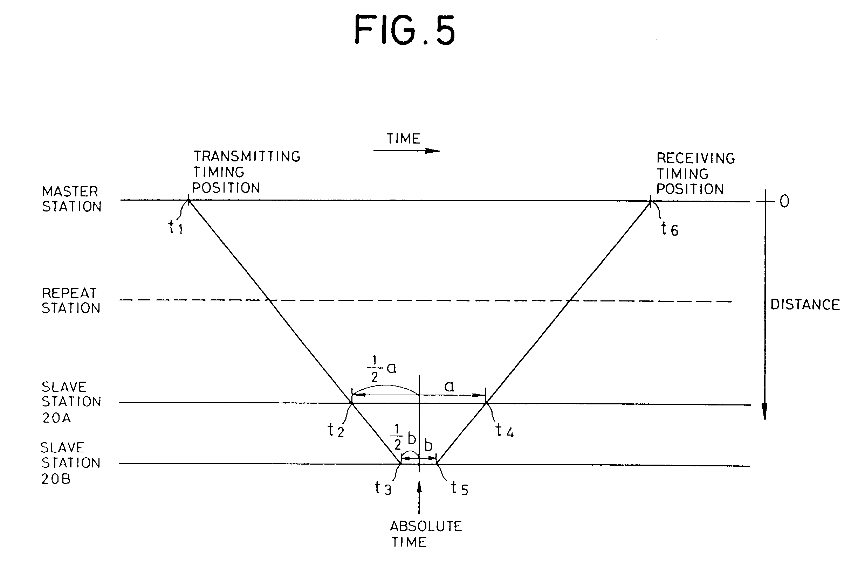

The super framer signal generating portion 14 forms a super frame having a period adapted to a period for transmitting a phase information necessary for matching phase of frame signals at an output stages (this phase is required to be matched between the peripheral slave stations, and a phase timing of the frame signal at the output stage in each of slave stations will be hereinafter referred to as absolute time (see Fig. 5)) between respective slave stations. The super frame is thus generated as a multi-frame containing n in number (n is an integer greater than or equal to two) of standard frames.

In this case, in synchronism with an external signal, the super frame is generated. Therefore, this external signal is a signal having a period corresponding to the period of the super frame to be generated. When a plurality of master stations are present, a common external signal is supplied for all of these master stations.

The reception control portion 17 receives a timing position matching burst signal for timing position matching (transmitted from a transmission burst control portion 28) from the slave station 20. A timing position matching control portion 16 detects reception timing position of the position matching burst signal. A delay amount calculating portion 15 calculates an error of the detected timing position of the timing position matching burst signal from a desired timing position to feed a delay information to be noticed to the slave station to the transmission control portion 11.

In the slave station 20, the reception control portion 21 receives a radio frame signal from the master station 10. A standard frame reproducing portion 22 generates a frame pulse of the standard frame as the basic frame similar to that generated by the standard frame generating portion 10 of the master station 10.

A frame number detecting portion 23 extracts and parses the frame number from the radio frame signal to identify the currently transmitted frame number. A super frame signal reproducing portion 24 identifies the super frame from the standard frame pulse and the frame number to reproduce the super frame pulse the same as the super frame generated in the super frame signal generating portion 14.

A delay information extracting portion 25 extracts the delay information for matching of the frame phase for the slave station 20 multiplexed in the received super frame. A 1/2 calculating portion 26 derives a half of the delay period in the delay information extracted to set as a delay period of a delay circuit 27. The delay circuit 27 delays the reproduced super frame signal for half of the delay period of the delay information to transmit to the governing service area.

The timing position matching signal 29 is a timing position matching burst signal (a signal having a preliminarily determined unique pattern and consisted of several bit strings). The transmission burst control portion 28 transmits a burst signal of a timing position matching signal with a delay according to a delay period extracted by the delay information extracting portion 25.

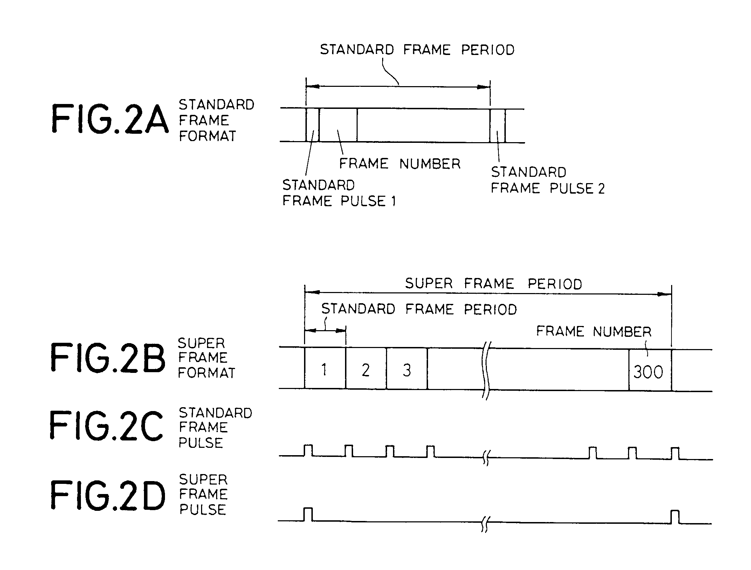

Figs. 2A to 2D show relationship between the standard frame and the super frame. As shown in Fig. 2A, in a standard frame format, standard frame pulses 1 and 2 are multiplexed and the period therebetween becomes the standard frame period. On the other hand, the frame numbers of respective frames are multiplexed and frame numbers are assigned as shown in Fig. 2B. In the shown example, the super frame is consisted of three hundreds of standard frames.

Fig. 2C shows reproduced standard frame pulses which can be obtained by establishing frame synchronization with extracting the standard frame pulses from the standard frame signal shown in Fig. 2A. Fig. 2D shows reproduced super frame pulses each of which is reproduced from the standard frame pulse of Fig. 2C and the frame number.

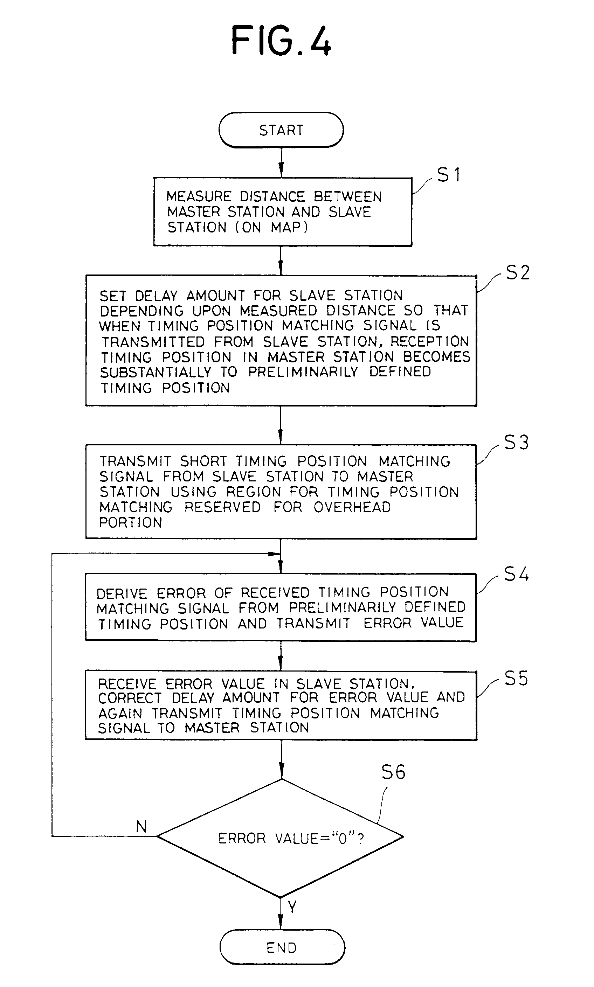

In Fig. 1, operation of transmission burst timing position matching based on the transmission burst from the slave station 20 in the time division multi-direction multiplex communication system will be discussed with reference to a flowchart of operation shown in Fig. 4.

At first, a distance between the master station and the slave station is measured on a map (step S1). Then, when a timing position matching signal is transmitted from the slave station, a delay amount is determined on the basis of the measured distance so that the reception timing position at the master station substantially matches with a preliminarily defined timing position to set the delay amount in the transmission burst control portion 28 in the slave station (step S2).

In this case, the preliminarily defined timing position means a reception timing position t6 at the master station shown in Fig. 5.

Next, avoiding a user portion in the frame used by other slave station, and using a region for timing position matching, which is preliminarily reserved in a frame overhead, the timing position matching signal 29 is transmitted to the master station (step S3). In this case, the timing position matching signal 29 is a unique pattern of several bits, as set forth above.

The timing position matching signal 29 is received in the reception control portion 17 in the master station. Then, in the position matching control portion 16, the timing position matching signal is detected. The delay amount calculating portion 15 derives a error of the reception timing position of the received timing position matching signal 29 relative to the preliminarily defined reception timing position. The delay (error) information thus derived in the delay amount calculating portion 15 is transmitted superimposing on the super frame by the transmission control portion 11 at the super frame period (step S4).

The delay information is extracted in the delay information extracting portion 25 in the slave station to again transmit the position matching signal 29 with shifting for a period corresponding to the delay information (step S5).

The processes of steps S4 to S5 are repeated until the offset (error) amount becomes "0" (step S6). The delay period of the transmitted timing position matching signal 29 in the slave station 20 represents a or b in Fig. 5 which will be discussed later.

The foregoing timing position matching operation is performed not only upon initial setting of the slave station but also performed regularly by detecting offset amount of the reception timing position in the master station of the timing position matching signal 29 from the slave station from the defined position (t6 of Fig. 5) to perform the timing position matching process of Fig. 4, during normal operation.

A relationship of delay of the frame to the slave station 20A and to the slave station 20B in the case where system construction as shown in Fig. 3 is employed, is shown in Fig. 5. When a down frame signal transmitted at a timing position t1 from the master station reaches the slave station 20A at a timing position t2 and reaches the slave station 20B at a timing position t3. The delay information provided by the master station is a and b in Fig. 5 as set forth above. In relation to the distance from the master station, the up frames are transmitted from the slave stations 20A and 20B at the timing positions t4 and t5. So that the timing position of the reception frames match at the timing position t6 at the master station, the delay information a and b are provided for respective slave stations 20A and 20B.

Here, concerning the frame signal, if the transmission delays of the down frame and the up frame are substantially the same, all of the timing points delayed from the arrival period for half of the delay information a and b should match with the absolute time.

Therefore, in the slave station 20 of Fig. 1, 1/2 calculating portion 26 is provided to provide half of the delay information extracted by the delay information extracting portion 25 to the delay circuit 27 to provide a delay for half of the delay information for the super frame pulse from the super frame signal reproducing portion 24, the phase of the super frame at the output portion in respective slave stations can be synchronized.

The construction shown in Fig. 3 is an application system, in which a radio TDMA (dime division multiplex communication) system applied for a wireless local loop market and so forth and a digital cordless telephone system (PHS technology application) are combined. In such case, when a zone A governed by the base station 30A of the digital cordless telephone system connected to the slave station 20A and a zone B governed by the base station 30B connected to the slave station 20B are located adjacent with each other, the broadcasting control channel or so forth to be transmitted from respective base stations at the same timing is required to establish phase synchronization between the zones A and B since otherwise causes interference of both radio wave from the base stations 30A and 30B in the telephone terminal FT2.

Accordingly, by applying the super frame signals from the delay circuits 27 of respective slave stations to respective base stations connected to the slave stations, interoffice phase synchronization can be established. Establishing of phase synchronization is effective function even in DCA (dynamic channel assignment) operation of the digital cordless telephone system. DCA operation is per se known technology and neglected from detailed discussion.

Next, a reason why the super frame structure as shown in Fig. 2B is employed will be discussed. Concerning interoffice phase synchronization, it is typical to perform synchronization process per long period unit instead of per frame unit. The reason is that, in message transmission or so forth, some are transmitted per long period unit, for example, in the system utilizing PHS, interoffice synchronization has to be established in the period of 1200 ms.

Therefore, in the present invention, super frame is defined to establish the super frame by aggregating several hundreds of standard frames to transmit the delay information from the master station in the period of the super frame. In this case, the delay information may be multiplexed by assigning to some time slot in the standard frame.

In general, one standard frame includes a frame pattern portion for synchronization, an overhead portion for transmitting frame information for frame number and control signal, and a user portion for transmitting subscriber information. For the delay information, a vacant region in the overhead portion may be used.

The first effect of the present invention is that requirement for dedicated hardware and control function in the base station required for establishing phase synchronization with peripheral base station becomes minimum. The reason is that interoffice synchronization can be established only by the delay information from the network.

The second effect is that, between the integrated control station and the base station is not the conventional preferential transmission zone but is radio transmission of TDMA, special transmission delay measurement function becomes unnecessary. In the TDMA (time division multi-direction multiplex communication system), since the up frame from the slave station is spatially multiplexed, at the reception point in the master station, the burst signals from respective slave station has to be consistent with each other. Therefore, the slave station is inherently provided a function for phase delay, and in the master station, the function corresponding to transmission delay measurement is provided. Therefore, existing function can be made the base use of interoffice absolute phase matching. By this, interoffice phase synchronization system useful when the TDMA system subscriber radio communication system is used as entrance circuit for the digital cordless telephone system (personal handy phone system: PHS), can be provided.

## Claims

1. An interoffice phase synchronization system for transmitting a frame signal from a master station to a plurality of slave stations and establishing phase synchronization of said frame signal between said slave stations, comprising:
said master station including:
offset amount detecting means for detecting an offset amount of a reception timing position of a timing signal transmitted for phase synchronization from said slave station, relative to a preliminarily defined timing position; and
transmitting means for transmitting a delay information depending upon the detected offset amount;
said slave station including:
transmitting means for transmitting said timing signal to said master station;
extracting means for extracting said delay information included in a transmission signal from said master station; and
delay means for delaying a transmission frame signal from said master station for a delay period depending upon the extracted delay information.

2. An interoffice phase synchronization system as set forth in claim 1, wherein said delay means delays said transmission frame signal for a delay period corresponding to a half of the delay period indicated by said extracted delay information.

3. An interoffice phase synchronization system as set forth in claim 2, wherein said transmission means of said master station transmits said delay information in a period n times (n is an integer greater than or equal to 2) of a period of said frame signal.

4. An interoffice phase synchronization system as set forth in claim 3, wherein said transmission means of said master station includes a super frame generating means for generating a super frame consisted of n in number of frames of said frame signals, and means for transmitting said delay information multiplexing per said super frame.

5. An interoffice phase synchronization system as set forth in claim 4, wherein said super frame generating means includes superimposing means for superimposing frame numbers of respective frames consisting said super frame sequentially with the frames, and
said slave station includes a reproducing means for reproducing said super frame signal on the basis of said frame number, and wherein the reproduced super frame signal is delayed by said delay means.

6. An interoffice phase synchronization system as set forth in claim 1, which is employed in a time division multi-direction multiplex communication system.

7. An interoffice phase synchronization method for transmitting a frame signal from a master station to a plurality of slave stations and establishing phase synchronization of said frame signal between said slave stations, comprising:
first step of transmitting a timing signal from said slave station to said master station;
second step of, in said master station, detecting an offset amount of a reception timing position of said timing signal transmitted for phase synchronization from said slave station, relative to a preliminarily defined timing position;
third step of, in said master station, transmitting a delay information depending upon the detected offset amount;
fourth step of, in said slave station, extracting said delay information contained in said transmission signal from said master station; and
fifth step of, in said slave station, delaying a transmission frame signal from said master station for a delay period depending upon the extracted delay information.

8. An interoffice phase synchronization method as set forth in claim 7, wherein, in said fifth step, the frame signal is delayed for a delay period corresponding to a half of the delay period indicated by said extracted delay information.

9. An interoffice phase synchronization method as set forth in claim 8, which further comprises:
sixth step of re-transmitting said timing signal from said slave station to said master station with a delay for a period corresponding to said extracted delay information; and
seventh step of repeating said second to fifth steps until said offset amount becomes "0".

10. An interoffice phase synchronization method as set forth in claim 9, wherein, in said third step, said master station transmits said delay information in a period n times (n is an integer greater than or equal to 2) of a period of said frame signal.

11. An interoffice phase synchronization method as set forth in claim 10, wherein, in said third step, a super frame consisted of n in number of frames of said frame signals is generated for transmitting said delay information multiplexing per said super frame.
